**Europäisches Patentamt**

**European Patent Office**

**Office européen des brevets**

(19)

(11) Veröffentlichungsnummer: **0 260 456 B1**

(12) **EUROPÄISCHE PATENTSCHRIFT**

(45) Veröffentlichungstag der Patentschrift: **19.05.93**

(21) Anmeldenummer: **87111947.5**

(22) Anmeldetag: **18.08.87**

(51) Int. Cl.⁵: **C09B 67/20**, C09D 17/00, //C08G18/62

(54) **Pigmentdispersion und deren Verwendung.**

(30) Priorität: **19.08.86 DE 3628123**

(43) Veröffentlichungstag der Anmeldung:
**23.03.88 Patentblatt 88/12**

(45) Bekanntmachung des Hinweises auf die Patenterteilung:
**19.05.93 Patentblatt 93/20**

(84) Benannte Vertragsstaaten:
**AT BE CH DE ES FR GB IT LI NL SE**

(56) Entgegenhaltungen:
**EP-A- 0 052 224
EP-A- 0 130 451
FR-A- 1 295 273
GB-A- 1 557 269**

(73) Patentinhaber: **Herberts Gesellschaft mit be-schränkter Haftung
Christbusch 25
W-5600 Wuppertal 2(DE)**

(72) Erfinder: **Bederke, Klaus, Dr. Dipl.-Ing.
Oststrasse 36
W-4322 Sprockhövel(DE)**
Erfinder: **Brock, Thomas, Dr. Dipl.-Chem.
Kallweg 2
W-5030 Hürth(DE)**
Erfinder: **Kerber, Hermann, Dipl.-Ing.
Daniel Schürmann Weg 37
W-5600 Wuppertal 21(DE)**
Erfinder: **Rupieper, Paul, Dipl.-Phys.
Deilbacher Strasse 52
W-5620 Velbert 15(DE)**

(74) Vertreter: **Türk, Gille, Hrabal, Leifert
Brucknerstrasse 20
W-4000 Düsseldorf 13 (DE)**

**Beschreibung**

Die Erfindung betrifft eine Pigmentdispersion, welche sich zur Herstellung von Überzugsmitteln eignet, und die mindestens ein Lösungsmittel und ein Pigmentdispergiermittel enthält, wobei das Pigmentdispergiermittel aus einem OH−Gruppen enthaltenden Mischpolymeren besteht, das ethylenisch ungesättigte Monomere einpolymerisiert enthält. Die Erfindung betrifft auch die Verwendung solcher Pigmentdispergiermittel zur Herstellung von Überzugsmitteln, insbesondere Lacken.

Überzugsmittel, wie Lacke, Anstrichfarben, Füller, Grundierungen, enthalten als wesentliche Bestandteile filmbildende Bindemittel und Pigmente sowie übliche Zusatzstoffe. Ein großes Problem bei der Herstellung solcher Überzugsmittel liegt darin, die Pigmente ausreichend zu dispergieren, wobei vermieden werden muß, daß ein erhaltener optimaler Dispergierzustand bei der Lagerung von Zwischenprodukten zur Herstellung der Lacke, der Lacke selbst und während der Verarbeitung wieder verloren geht. Unter Zwischenprodukten werden im wesentlichen verstanden Pigmentpasten und Anreibpasten. Im Handel erhältlich sind Pigmentpasten, die in Lösungsmittel die gewünschten Pigmente und Pigmentdispergiermittel enthalten, sowie gegebenenfalls weitere Zusatzstoffe. Anreibpasten enthalten häufig zusätzlich noch Bindemittel, wie sie in dem Überzugsmittel verwendet werden, zu dem die Anreibpasten verarbeitet werden sollen. Diese Probleme sind besonders groß bei Autoreparaturlacken, weil diese in relativ kleinen Mengen verkauft werden und oft sehr lange von den Autoreparatur−Betrieben gelagert werden, ehe sie eingesetzt werden.

Eine gute Pigmentdispergierung ist auch abhängig von der Art des Bindemittels des Überzugsmittels und der Art des Pigments. Überzugsmittel enthaltend z.B. Alkydharze als Bindemittel neigen in allgemeinen weniger zu Problemen hinsichtlich der Pigmentdispersions−Stabilität als z.B Acrylharze. Andererseits gibt es Pigmente, die sich sehr gut und stabil dispergieren lassen und andere, in Fachkreisen "kritische" Pigmente genannte, die erhebliche Probleme verursachen. Sie lassen sich sehr schwer stabil dispergieren und bewirken eine schlechte Lagerfähigkeit der Überzugsmittel.

Eine schlechte Dispergierung führt bei einigen Pigmenten, so auch bei den im folgenden beschriebenen Beispielen, zu einer mehr oder weniger starken Flokkulation bzw. einem Aufschwimmen der Pigmente, eventuell auch anderer anwesender Pigmente. Eine Kornvergröberung und ein Aufschwimmen haben häufig auch einen Einfluß auf die Farbstärke, den Glanz und den Farbort (Verschiebung der optischen Remission des fertigen Anstrichs zu anderen Wellenlängen).

Bei der Herstellung der Überzugsmittel können bei Einsatz der bekannten Dispergiermittel Probleme hinsichtlich des rheologischen Verhaltens auftreten, z.B. dahingehend, daß in den Mühlen (z.B. geschlossene Rührwerkskugelmühlen) ein ungenügendes Fließverhalten vorliegt. Dies wirkt sich nachteilig auf den Energieverbrauch und die Durchsatzmengen aus.

Diese Probleme konnten teilweise in mehr oder weniger zufriedenstellendem Ausmaß gelöst werden durch die Verwendung von sogenannten Pigmentdispergiermitteln, wie sie z.B. beschrieben sind in der DE−C−22 18 613, EP−A−52 224, EP−A−154 678 und J. Toole, Developments in Hyperdispersants Technology for Paints; Paint + Resin −Februar 1985. Versuche haben ergeben, daß das in EP−A−52 224, Beispeil 1 beschriebene Pigmentdispergiermittel bei Verwendung von feinstteiligen, hochwertigen Pigmenten für Automobildecklacke zu einem sehr schlechten Viskositätsverhalten führt, welches einen Einsatz auf einer Rührwerkskugelmühle praktisch unmöglich macht. Der im genannten Beispiel 1 der EP−A−52 224 erwähnte Knochenruß gehört nicht zu den feinstteiligen, hochwertigen Pigmenten. Die in der EP−A−52 224 angegebenen Mahlfeinheiten deuten ebenfalls auf eine nicht vollständige Dispergierung bzw. den Einsatz von nicht hochwertigen Pigmenten hin, zu deren Dispergierung vergleichsweise eine geringe Menge Dispergiermittel genügt.

Die in DE−C−22 18 613 in den Beispielen beschriebenen Pigmentdispersionen enthalten, bezogen auf die Pigmentmenge, sehr hohe Anteile an Dispergiermittel. Ein derartig hoher Anteil an Dispergiermittel schränkt die universelle Verwendbarkeit solcher Pigmentdispersionen ein.

Mit den in EP−A−154 678 beschriebenen Dispergiermitteln können in vielen Fällen ausgezeichnete Ergebnisse erhalten werden. Bei einigen besonders kritischen Pigmenten können aber ebenfalls die oben beschriebenen Probleme auftreten. Solche besonders kritische Pigmente sind z.B.

| Chinacridon | C.I. | P.R. | 122 |
|---|---|---|---|
| Rotes Azopigment | C.I. | P.R. | 170 |
| Tetrachlorthioindigo | C.I. | P.R. | 88 |
| Perylen | C.I. | P.R. | 179 |
| Tetrachlorisoindolinon | C.I. | P.Y. | 110 |
| Hochoxidierter Ruß | C.I. | P.Bl. | 7 |
| Phthalocyaninblau chlorierte und bromierte | C.I. | P.B. | 15:4 |
| Phthalocyanine | C.I. | P.G. | 7 und P.G. 36 |

In der EP − A − 130 451 werden Überzugsmittel auf der Basis von Isocyanuratgruppen aufweisenden Polyisocyanaten und Polyhydroxypolyacrylatharzen aus Hydroxyalkylestern der (Meth)acrylsäure, Alkyle − stern der (Meth)acrylsäure, mindestens einer olefinisch ungesättigten N − haltigen heterocyclischen Ver − bindung, sowie (Meth)acrylsäureamiden, beschrieben.

Der Erfindung liegt die Aufgabenstellung zugrunde, Nachteile der bekannten Dispergiermittel zu vermeiden und besonders bei Verwendung von sogenannen "kritischen" Pigmenten eine gute Dispersion der Pigmente zu erzielen, wobei Überzugsmittel erhalten werden, die lange Zeit eine ausreichende Stabilität besitzen, so daß die erhaltenen Überzüge, insbesondere Lacke, zufriedenstellend sind.

Es wurde gefunden, daß diese Aufgabe dadurch gelöst werden kann, daß die nachfolgend definierten Pigmentdispergiermittel eingesetzt werden.

Gegenstand der Erfindung ist demgemäß eine Pigmentdispersion, welche sich zur Herstellung von Überzugsmitteln eignet, enthaltend mindestens ein Pigment und mindestens ein Lösungsmittel und ein Pigmentdispergiermittel, wobei das Pigmentdispergiermittel aus einem OH − Gruppen enthaltenden Misch − polymeren besteht, das ethylenisch ungesättigte Monomere einpolymerisiert enthält, die dadurch gekenn − zeichnet ist, daß das Mischpolymere erhältlich ist durch Umsetzung von

A) 80 bis 95 Gew.% eines Copolymerisats aus

a) 0.5 bis 40 Gew. − % a1) N[N,N − Di − $C_{1bis4}$ − alkylamino − $C_{1bis8}$alkyl](meth)acrylamiden allein oder im Gemisch mit N,N − Di − $C_{1bis4}$ − alkylamino − $C_{1bis8}$ − alkyl(meth)acrylaten, N − substituierten (Meth) − acrylamiden und/oder (Meth)acrylamid; oder a2) N,N − Di − $C_{1bis4}$ − alkylamino − $C_{1bis8}$ − alkyl(meth) − acrylaten im Gemisch mit N − substituierten (Meth)acrylamiden und/oder (Meth)acrylamid; wobei das Verhältnis der Amino(meth)acrylate zu den Amido(meth)acrylaten 1 : 2 bis 2 : 1 sein soll;

b) 10 bis 40 Gew. − % Hydroxi − $C_{2-8}$alkyl(meth)acrylaten bevorzugt Hydroxi − $C_{2-4}$ − alkyl(meth) − acrylaten,

c) 20 bis 89.5 Gew. − % copolymerisierbaren $\alpha,\beta$ − olefinisch ungesättigten Verbindungen, und

B) 5 bis 20 Gew. − % eines unverkappte und gegebenenfalls auch verkappte Isocyanatgruppen aufwei − senden Polyisocyanats, das Biuret − , Urethan − oder Isocyanurat − Gruppen aufweist.

Weiterhin ist Gegenstand der Erfindung die Verwendung der vorstehend definierten Pigmentdisper − giermittel zur Herstellung von Überzugsmitteln auf organischer und/oder wässriger Basis.

Wie die später beschriebenen Vergleichsversuche zeigen, wird mit den gemäß der Erfindung verwen − deten Pigmentdispergiermitteln eine überraschend gute Dispersion von Pigmenten allgemein und insbe − sondere auch von "kritischen Pigmenten erzielt. Allgemein wird eine sehr gute Dispersion der Pigmente bewirkt, wobei in den Pigmentpasten und Pigmentanreibpasten ein sehr hoher Pigmentanteil vorliegen kann. Ein höherer Anteil an Pigment im Mahlgut, der in einigen Fällen im Vergleich zum Stand der Technik die dreifache Menge erreichen kann, bewirkt eine erhöhte Produktivität, da Viskosität und Dispergieraufwand trotzdem in normalen Bereichen bleiben. Insgesamt ist eine bessere Qualität der Dispergierung bei geringerem Aufwand möglich.

Durch die gute und schnelle Ausmahlung und Stabilisierung gegen Flokkulation werden die eingesetz − ten Pigmente optimal ausgenutzt.

Zur Herstellung des gemäß der Erfindung verwendeten Pigmentdispergiermittels wird als Komponente A das oben beschriebene Copolymerisat eingesetzt. Dieses wird mit dem oben beschriebenen als Komponente B bezeichneten Polyisocyanat umgesetzt. Die Menge der Komponente A beträgt mindestens etwa 80 Gew. − %, und entsprechend die Menge an Komponente B höchstens 20 Gew. − %. Die Summe der Komponenten A und B ist 100. Die Mengenverhältnisse müssen unter Berücksichtigung der jeweils eingesetzten speziellen Verbindungen so ausgewählt werden, daß das Umsetzungsprodukt von A und B einen ausreichenden Gehalt an OH − Gruppen aufweist, z.B. eine OH − Zahl von mindestens 60. Besonders bevorzugt liegt die OH − Zahl bei mindestens 80. Die obere Grenze liegt zweckmäßig bei etwa 150, vorzugsweise bei etwa 120.

Die Komponente A ist ein Copolymerisat aus den oben genannten Monomeren. Verbindungen der Komponente a) können im Molekül sowohl eine tertiäre Aminogruppe als auch eine N−substituierte Amid−Gruppe enthalten, z.B. N[N,N−Dimethylaminopropyl]methacrylamid. Derartige Verbindungen können zur Herstellung des erfindungsgemäßen Copolymerisats allein oder in Kombination mit tertiäre Amino−Gruppen tragenden (Meth)acrylaten und/oder N−substituierten (Meth)acrylamiden und/oder (Meth)−acrylamid eingesetzt werden. Es können aber auch Gemische aus tertiäre Amino−Gruppen enthaltenden (Meth)acrylaten und N−substituierten (Meth)acrylamiden oder (Meth)acrylamid zum Einsatz kommen.

Das angewendete Kombinationsverhältnis der Verbindungen, die tertiäre Aminogruppen enthalten, zu den Verbindungen, die N−substituierte oder unsubstituierte Amidgruppen enthalten, beträgt vorzugsweise 1:1.1 bis 1.1:1.

Als Monomerkomponente a) kommen bevorzugt die folgenden Verbindungen infrage:

Beispiele für N[N,N−Di−$C_{1bis4}$−alkylamino−$C_{1bis8}$−alkyl](meth)acrylamide sind N[N,N−Diethylaminopropyl]methacrylamid, die entsprechende Di−n−butylverbindung, N[N,N−Dimethylaminoneopentyl]methacrylamid sowie die entsprechenden Aminomethyl− und Aminooctylverbindungen. Besonders bevorzugt ist N[N,N−Dimethylaminopropyl]methacrylamid.

Anstelle oder zusätzlich zu den N[N,N−Di−$C_{1bis4}$−amino−$C_{1bis8}$−alkyl](meth)acrylamiden kann ein Gemisch von N,N−Di−$C_{1bis4}$−alkylamino−$C_{1bis8}$−alkyl(meth)acrylaten und N−$C_{1bis12}$−alkyl(meth)−acrylamiden oder N−$C_{1bis12}$−cycloalkyl(meth)acrylamiden oder N−$C_{1bis12}$−aralkyl(meth)acrylamiden und/oder (Meth)acrylamid eingesetzt werden.

Beispiele für N,N−Di−$C_{1bis4}$−alkylamino−$C_{1bis8}$−alkyl(meth)acrylate sind:
N,N−Dimethylaminoethylacrylat, N,N−Dimethylaminoethylmethacrylat, N,N−Diethylaminoethylacrylat, N,N−Dimethylaminoneopentylacrylat. Der Alkylteil der am Stickstoffatom gebundenen Alkylgruppen zwischen dem Stickstoffatom und der Estergruppe enthält zweckmäßig 2 bis 8 C−Atome.

Beispiele für N−substituierte (Meth)acrylamide sind:
N−Methyl−, N−Ethyl−, N−n−Propyl−, N−Isopropyl−, N−n−Butylacrylamid, N−Methylmethacrylamid, N−(1,1−Dimethyl−3−oxobutyl)−acrylamid, N−tert.−Butyl−methacrylamid, N−Decylacrylamid, N−Cyclohexylmethacrylamid, N−Benzylmethacrylamid und N−Alkoxymethyl(meth)acrylamide, wie z.B. N−n−Butoxymethylacrylamid und N−n−Butoxymethylmethacrylamid.

Als N−Substituenten für die (meth)acrylamide kommen aliphatische, cycloaliphatische oder aromatische Gruppen infrage, wie sie in (Meth)acrylamiden des Stands der Technik vorliegen, die zur Herstellung von Acrylatharzen eingesetzt werden. Diese Gruppen können auch Heteroatome enthalten, und in diesem Sinne können z.B. auch Keto−Gruppen als N−Substituenten vorliegen.

Als Komponenten b) können die auf dem Gebiet der Acrylatharze üblichen Hydroxyacrylate eingesetzt werden. Vorzugsweise sind dies Hydroxyethylacrylat, Hydroxyethylmethacrylat, 2−Hydroxypropylacrylat, 2−Hydroxypropylmethacrylat, 4−Hydroxybutylacrylat und 4−Hydroxybutylmethacrylat.

Als Komponente c) werden die zur Herstellung von Acrylaten üblicherweise eingesetzten copolymeri−sierbaren $\alpha,\beta$−olefinisch ungesättigten Verbindungen verwendet. Beispiele hierfür sind: Vinylaromaten, wie Styrol, $\alpha$−Methylstyrol, o,m,p−Methylstyrol, p−tert.−Butylstyrol, wobei Styrol bevorzugt ist; Alkylester der (Meth)acrylsäure, wie Methyl−, Ethyl−, Propyl−, n−Butyl−, iso−Butyl−, tert.−Butyl, Hexyl−, Octyl−, Decyl−, Dodecyl−, Hexadecyl−, Octadecyl−Acrylat bzw. −Methacrylat, wobei n−Butyl−, iso−Butyl−, tert.−Butylacrylat, 2−Ethylhexylacrylat und Methyl−, n−Butylmethacrylat bevorzugt sind; Vinylester , wie Vinylacetat, Vinylpropionat, Vinylversatat; Alkylester ungesättigter Polycarbonsäuren z.B. der Malein−, Fumar−, Croton−, Itacon− und Citraconsäure.

Das Gewichtsverhältnis der Komponenten a):b):c) beträgt vorzugsweise 12−30:30−40:30−60.

Die Herstellung des erfindungsgemäßen Copolymerisats kann durch Polymerisation nach üblichen Verfahren, z.B. der Substanz−, Lösungs− oder Perlpolymerisation durchgeführt werden. Die verschiedenen Polymerisationsverfahren sind gut bekannt und beschrieben in:Houben−Weyl, Methoden der Organischen Chemie, 4. Aufl., Band 14/1, S. 24−255 (1961).

Das Lösungspolymerisationsverfahren wird bei der Herstellung des erfindungsgemäßen Copolymerisats bevorzugt, weil die Umsetzung des hydroxyfunktionellen Polymerisats mit teilverkappten oder unverkappten Polyisocyanaten einfacher durchgeführt werden kann und das Pigmentdispergiermittel in gelöster Form zur Anwendung kommt.

Die Polymerisation wird bei Temperaturen zwischen 60˚C und 160˚C vorzugsweise bei 80˚C bis 140˚C durchgeführt. Die Polymerisationsreaktion wird mit bekannten Polymerisationsinitiatoren gestartet. Geeignete Initiatoren sind Per− und Azo−Verbindungen. Letztere werden bevorzugt eingesetzt, weil Per−Verbindungen beim Einsatz der erfindungsgemäßen tertiäre Amino−Gruppen und N−substituierte oder unsubstituierte Säureamid−Gruppen enthaltenden Comonomeren eine Gelbfärbung des Pigmentdispergiermittels bewirken können.

Die Polymerisationsinitiatoren, insbesondere aliphatische Azo−Verbindungen ,z.B. Azo−bis−isobutyronitril (AIBN) werden zweckmäßig in Mengen von 0.1 bis 4 Gew.−%, bezogen auf die Monomeren−Einwaage, zugesetzt.

Zur Regelung des Molekulargewichts können Kettenüberträger mitverwendet werden. Beispiele sind Mercaptane, Thioglykolsäureester, Chlorkohlenwasserstoffe.

Die Polymerisationsbedingungen (Reaktionstemperatur, Zulaufzeit der Monomerenmischung, Lösungskonzentration) werden so gewählt, daß das Zahlenmittel der Molmasse (bestimmt durch Gelpermeationschromatographie unter Verwendung von Polystyrol als Eichsubstanz) zwischen 3000 und 100 000 liegt.

Die erfindungsgemäß hergestellten Copolymerisate liegen in einem Glasübergangstemperaturbereich von −20˚C bis +75˚C, berechnet aus der in der Literatur angegebenen Glasübergangstemperatur der Homopolymerisate der einzelnen Monomeren (Fox−Gleichung).

Ein wesentliches Merkmal der Pigmentdispergiermittel der vorliegenden Erfindung ist, daß die vorstehend beschriebenen Copolymerisate umgesetzt werden mit Polyisocyanaten. Die hierfür gemäß der Erfindung eingesetzten Polyisocyanate müssen mindestens teilweise unverkappte Isocyanatgruppen enthalten, die mit den OH−Gruppen der Komponente A reagieren. Die Polyisocyanate können zusätzlich auch noch verkappte Isocyanatgruppen enthalten. Bevorzugt sind teilweise verkappte Polyisocyanate.

Als Verkappungsmittel werden CH−, NH− oder OH−acide Verbindungen verwendet wie Maonsäure−dialkylester, Acetessigsäurealkylester, Acetylaceton, $\epsilon$−Caprolactam, Hydroxybenzoesäureester, tert.−Bu−tanol und Oxime, wie Methylethylketoxim, Dimethylketoxim. Besonders bevorzugt sind Acetessigsäureeth−ylester, Methylethylketoxim und $\epsilon$−Caprolactam.

Das Verhältnis Polyisocyanat: Verkappungsmittel wird so gewählt, daß nach Durchführung der Verkappungsreaktion rein rechnerisch mindestens eine NCO−Gruppe pro Molekül eingesetztem Polyisocyanat frei verfügbar ist für die Umsetzung des teilweise verkappten Polyisocyanats mit dem OH−gruppenhaltigen Copolymerisat (Komponente A).

Die Mengenverhältnisse der erfindungsgemäß in Reaktion zu bringenden beiden Harzkomponenten Copolymerisat A und teilweise oder unverkapptes Polyisocyanat B werden zweckmäßig so veranschlagt, daß das Äquivalentverhältnis der reaktionsfähigen Hydroxylgruppen des Copolymerisats A zu den Isocyanatgruppen des teilweise oder unverkappten Polyisocyanats B sich verhält wie 99:1 bis 70:30, vorzugsweise 95:5 bis 85:15.

Die gemäß der Erfindung verwendeten Polyisocyanate enthalten in ihrem Molekül Biuret−, Urethan−oder Isocyanuratgruppen, und zwar im wesentlichen deshalb, weil gemäß der Erfindung als Polyisocyanate Handelsprodukte als Ausgangsprodukte verwendet werden und diese solche Gruppen enthalten.

Da es gemäß der Erfindung zweckmäßig ist, daß die zur Umsetzung mit der Komponente A eingesetzten Polyisocyanate nur eine freie Isocyanatgruppe pro Molekül enthalten, können diese auch aus Handelsprodukten dadurch hergestellt werden, daß sie mit einer solchen Menge Verkappungsmittel umgesetzt werden, so daß im Mittel pro Molekül Polyisocyanat noch eine freie Isocyanatgruppe verbleibt. Beispiele für derartige Polyisocyanate sind ein Biuretgruppen enthaltendes Umsetzungsprodukt von Hexamethylendiisocyanat und Wasser, beispielsweise aus 3 Molen Hexamethylendiisocyanat mit 1 Mol Wasser mit einem NCO−Gehalt von etwa 22% (entsprechend dem Handelsprodukt Desmodur N®BAYER); ein Isocyanuratgruppen enthaltendes Polyisocyanat, das beispielsweise durch Trimerisierung von Hexamethylendiisocyanat hergestellt wird, mit einem NCO−Gehalt von etwa 21,5% (entsprechend dem Handelsprodukt Desmodur 3390®BAYER); oder Urethanggruppen enthaltende Polyisocyanate, beispielsweise Reaktionsprodukte aus 3 Molen Diisocyanat mit 1 Mol Triol, z.B. Toluylendiisocyanat und Trimethylolpropan (NCO−Gehalt etwa 17,5%, entsprechend dem Handelsprodukt Desmodur L ® BAYER).

Die Herstellung der erfindungsgemäßen Pigmentdispersion erfolgt durch Vermischen der Bestandteile in bekannten üblichen Misch− bzw. Mahlaggregaten. Dabei kann das Pigmentdispergiermittel, das wie oben beschrieben hergestellt wurde, mit Pigmenten und üblichen Lösungsmitteln sowie gegebenenfalls sonstigen üblichen Zusatzstoffen vermischt werden. Nach einer besonders bevorzugten Ausführungsform kann diesem Gemisch auch schon ein Anteil des Bindemittels zugesetzt werden, das im Überzugsmittel als Bindemittel vorhanden ist, in welches Überzugsmittel die Pigmentdispersion gemäß der Erfindung bei ihrer Verwendung später eingearbeitet wird. Dies ist auf dem Gebiet der Pigmentdispersionen üblich. Diese bereits Bindemittel enthaltenden Pigmentdispersionen sind ausgerichtet auf spezielle Überzugsmittel, die jeweils die entsprechenden Bindemittel enthalten.

Wenn die Pigmentdispersion gemäß der Erfindung nicht zusätzliche Bindemittel enthält, können diese in universeller Weise vom Lackproduzenten zur Herstellung von Überzugsmitteln verwendet werden, die unterschiedliche Bindemittel enthalten, da diese Pigmentdispersionen gemäß der Erfindung für verschiedene Bindemittelsysteme einsetzbar sind. Dies führt zu erheblich reduzierten Kosten für die Herstellung, Lagerung und Transport der benötigten Pigmentdispersions−Pasten für eine Lackfertigung.

Da aber die Pigmentdispergiermittel gemäß der Erfindung Acrylat−Copolymerisate sind, zeigen sie naturgemäß eine besondere Verträglichkeit mit den üblichen Lack−Acrylatharz−Bindemitteln. Sie sind deshalb besonders geeignet für solche Überzugsmittel, die als Bindemittelbasis Acrylatharze enthalten.

Als Lösungsmittel, die in der Pigmentdispersion und in dem Copolymerisat enthalten sind, eignen sich bevorzugt organische Lösungsmittel. Diese können mit Wasser mischbar und nicht mischbar sein. Möglich ist auch die Verwendung von Wasser allein oder zusammen mit einem mit Wasser mischbaren organischen Lösungsmittel. Dem Wasser kann gegebenenfalls ein Neutralisationsmittel für saure bzw. basische Gruppen zugegeben sein. Beispiele für Lösungsmittel sind Glykolether, wie Ethylenglykoldimethylether; Glykoletherester, wie Ethylglykolacetat, Butylglykolacetat, 3−Methoxy−n−butylacetat, Butyldiglykolacetat, Methoxypropylacetat; Ester, wie Butylacetat, Isobutylacetat, Amylacetat; Ketone, wie Methylethylketon, Methylisobutylketon, Diisobutylketon, Cyclohexanon, Isophoron.

Aromatische Kohlenwasserstoffe, wie Xylol, Solvesso 100® (engetragenes Warenzeichen)und aliphatische Kohlenwasserstoffe können ebenfalls im Verschnitt mit den oben genannten Lösungsmitteln eingesetzt werden.

Zur Herstellung der erfindungsgemäßen Pigmentdispersion wird also beispielsweise das eingesetzte Pigment mit einer Lösung des oben beschriebenen Pigmentdispergiermittels in den oben beschriebenen Lösungsmitteln, gegebenenfalls unter Zusatz weiterer Mengen Lösungsmittel und/oder der oben erwähnten Überzugs−Bindemittel angeteigt und in üblichen Mischaggregaten fein dispergiert.

Bevorzugte Dispergatoren sind Schüttelmaschinen, wie Red Devil der Firma Erichsen, Rührwerks−Kugelmühlen, Sandmühlen. Gegegebenenfalls mitzuverwendende andere in der Lacktechnologie übliche Hilfsstoffe können bereits vor dem Dispergieren der Pigmente in die Mischung eingearbeitet werden. Das "Auflacken" (Komplettieren), d.h. die Herstellung des Überzugsmittels, z.B. Lackes, erfolgt mit einer der gewünschten Pigmentvolumenkonzentration entsprechenden Menge an Bindemittel bzw. Bindemittelgemisch. Das Auflacken geschieht vorzugsweise mit einem Schnellrührer, wobei Drehzahlen von etwa 2000 Umdrehung pro Minute ausreichen.Beim Auflacken können auch gegebenenfalls mitzuverwendende übliche Lackhilfsmittel hinzugefügt werden. Die resultierenden Lacke können mit den üblichen im Bindemittel enthaltenen organischen Lösungsmitteln und/oder Wasser auf die gewünschte Verarbeitungsviskosität verdünnt werden. Zur Einstellung bestimmter Farbtöne können die erfindungsgemäßen Pigmentdispersionen auch miteinander im jeweils erforderlichen Verhältnis gemischt und anschließend aufgelackt werden. Schließlich besteht auch die Möglichkeit, zum Abtönen eines fertigen Lacks geringe Menge einer erfindungsgemäßen Pigmentpaste in diesen nachträglich einzuarbeiten.

Herstellungsbeispiele a bis c:

Herstellung von teilverkappten Polyisocyanaten:
In einen 2−Liter−Dreihals−Kolben , der mit einem Rührwerk, Kontaktthermometer und Rückflußkühler ausgerüstet ist, wird Position A (Lösungsmittel und Verkappungsmittel, die Mengenangaben sind der Tabelle 1 zu entnehmen) vorgelegt und unter Rühren auf 60˚C aufgeheizt. Dann wird Position B (Polyisocyanat) zugesetzt und die Temperatur auf 80˚C gesteigert. Das Reaktionsgemisch wird solange bei 80˚C gehalten, bis die Verkappungsreaktion abgeschlossen ist.

T A B E L L E 1:
======================

(Einwaage in Gramm)

| Posi-tion: | Bestandteil: | Herstellungsbeispiele: | | |
|---|---|---|---|---|
| | | a | b | c |
| A | Diethylenglykoldimethylether | – | 240 | 237 |
| | Methoxypropylacetat | 92 | – | – |
| | Xylol | 150 | – | – |
| | Caprolactam | – | 177 | – |
| | Methylethylketoxim | – | – | 144 |
| | Acetessigester | 197 | – | – |
| | Zink(II)-Acetylacetonat | 1 | – | – |
| B | DESMODUR N 3390/90 [R] | 560 | 583 | 619 |
| Σ | | 1000 ==== | 1000 ==== | 1000 ==== |
| Kennzahlen: | | | | |
| | Festkörper (%): | 64,1 | 69,8 | 68,4 |
| | Viskosität (mPa.s b.25°C): | 186 | 660 | 410 |
| | NCO-Zahl: | 4,6 | 3,3 | 3,1 |

Beispiele 1 bis 5:

In einen 4 – Liter – Dreihals – Kolben, der mit einem Rührwerk, Kontaktthermometer, Kugelkühler und 2 Tropftrichtern ausgerüstet ist, wird Lösungsmittel der Position I (Mengenangaben sind der Tabelle 2 zu entnehmen) vorgelegt und unter Rühren auf 100°C aufgeheizt. Innerhalb von 5 Stunden werden Position II (Monomerengemisch) und Position III (Azo – bis – isobutyronitril – Lösung) aus Tropftrichtern heraus konti – nuierlich gleichzeitig zudosiert, wobei die Temperatur von 100°C konstant gehalten wird. Nach Ende der Zulaufzeit wird Position IV (Azo – bis – iso – butyronitril – Lösung) hinzugefügt. Die Tropftrichter werden mit Lösungsmittel der Position V nachgespült und das Lösungsmittel zum Reaktionsgemisch hinzugegeben.

Anschließend wird der Ansatz 3 Stunden lang bei 100°C nachpolymerisiert, so daß die Umsetzung>98% beträgt. Dann wird das Polymerisat mit Lösungsmittel der Position VI verdünnt und auf 60°C abgekühlt.

Die Urethanisierung erfolgt durch Zugabe von Position VII (teilverkapptes Polyisocyanat, Tabelle 1) und einer 2 – stündigen Reaktionszeit bei 60°C. Das erhaltene Pigmentdispergiermittel enthält praktisch keine freien NCO – Gruppen.

T A B E L L E 2:
==================
(Einwaage in Gramm)

| Posi-tion: | Bestandteil: | Beispiele: 1 | 2 | 3 | 4 | 5 |
|---|---|---|---|---|---|---|
| I | Diethylenglykoldimethylether | – | – | – | 336 | 336 |
| | Butylacetat | 200 | 200 | 200 | – | – |
| | Xylol | 132 | 132 | 132 | – | – |
| II | Cyclohexylmethacrylamid | – | – | 145 | – | – |
| | Dimethylaminoethylmethacrylat | – | – | 137 | – | – |
| | Dimethylaminopropylmethacrylamid | 149 | 200 | – | 200 | 200 |
| | Butylmethacrylat | 93 | – | – | – | – |
| | 2-Ethylhexylacrylat | 93 | 98 | 56 | 98 | 98 |
| | 2-Hydroxypropylmethacrylat | 375 | 380 | 373 | 380 | 380 |
| | Isobutylmethacrylat | – | 160 | – | 160 | 160 |
| | Methylmethacrylat | 186 | 78 | – | 78 | 78 |
| | tert.-Buytacrylat | – | – | 187 | – | – |
| | Styrol | 167 | 169 | 166 | 169 | 169 |
| III | Diethylenglykoldimethylether | – | – | – | 406 | 406 |
| | Butylacetat | 270 | 270 | 270 | – | – |
| | Xylol | 143 | 143 | 143 | – | – |
| | Azobisisobutyronitril | 17 | 17 | 17 | 24 | 24 |
| IV | Diethylenglykoldimethylether | – | – | – | 140 | 140 |
| | Butylacetat | 90 | 90 | 90 | – | – |
| | Xylol | 48 | 48 | 48 | – | – |
| | Azobisisobutyronitril | 6 | 6 | 6 | 4 | 4 |
| V | Diethylenglykoldimethylether | – | – | – | 20 | 20 |
| | Butylacetat | 20 | 20 | 20 | – | – |
| VI | Diethylenglykoldimethylether | – | – | – | 403 | 403 |
| | Butylacetat | 429 | 407 | 428 | – | – |
| VII | Teilverkapptes Polyisocyanat TABELLE 1: Beispiel a) | 82 | 82 | 82 | – | – |
| | Beispiel b) | – | – | – | 82 | – |
| | Beispiel c) | – | – | – | – | 82 |
| Σ | | 2500 ==== | 2500 ==== | 2500 ==== | 2500 ==== | 2500 ==== |
| Kennzahlen: | | | | | | |
| | Festkörper (%): | 44,5 | 44,0 | 44,3 | 44,2 | 44,5 |
| | Viskosität (mPa.s b.25°C): | 2680 | 1080 | 810 | 420 | 420 |

Beispiel 6

a) Herstellung einer schwarzen Pigmentdispersion

85.8 Gew.–Teile einer 74.2 Gew.–% Feststoffe enthaltenden Lösung eines für Lacke üblicherweise eingesetzten Acrylatharzes, das nachfolgend genauer beschrieben wird, 3.8 Gew.–Teile von einer der in den Beispielen 1,2,3,4 oder 5 erhaltenen Lösungen von Pigmentdispergiermittel, 5.6 Gew.–Teile einer 65 Gew. – % Feststoffe enthaltenden Calciumnaphthenat – Lösung und 4.8 Gew. – Teile Pigmentruß werden mit einem Dissolver vorgemischt und dann in einer Sussemeyer – Rührwerkskugelmühle gemahlen.

Das eingesetzte Acrylatharz wird analog Beispiel 1 der DE – C – 26 03 259 wie folgt hergestellt:

In einem mit Rührer, Rückflußkühler und Thermometer ausgerüsteteten Kolben werden 310 g Xylol und 186 g Glycidylester von $\alpha,\alpha$ – Dialkylalkanmonocarbonsäuren folgender Summenformel $C_{13}H_{24}O_3$ mit einem mittleren Epoxyäquivalent von 245, im folgenden nur noch mit Glycidylester $\alpha,\alpha$ – Dialkylmonocarbonsäuren bezeichnet, auf 142° C erhitzt und ein Gemisch, bestehend aus 145 g Methylmethacrylat, 135 g Hydroxy – ethylmethacrylat, 6 g tert. – Dodecylmercaptan, 195 g Styrol, 57 g Acrylsäure, 15 g Di – tert. – butylperoxyd in 3 Stunden gleichmäßig hinzugefügt und etwa 4 bis 5 Stunden bei 135° C polymerisiert und kondensiert. Die mit Ethylglykolacetat auf 50% Feststoff verdünnte Lösung ergibt Viskositäten von 130 Sekunden gemessen im DIN – Becher mit einer 4 – mm – Auslauföffnung bei 25° C. Der Hydroxylgruppengehalt beträgt 4,24%, bezogen auf den Feststoffanteil im Mischpolymerisat. Das Copolymerisat ergibt nach dem Entfernen des Lösungsmittels ein Schmelzintervall von 70 bis 72° C. Die Säurezahl des Copolymerisats hat den Wert 10.

b) Herstellung einer schwarzen Anstrichfarbe unter Verwendung der Pigmentdispersion a)

39 Gew. – Teile der Pigmentdispersion a) wurden mit 61 Gew. – Teilen des im Beispiel 6 a) beschrie – benen bekannten Acrylatharzes unter Rühren vermischt. Die erhaltene Anstrichfarbe war ein Acryl – Autolack der ausgezeichnete Stabilisierung der dispergierten Rußteilchen aufwies. So waren weder beim Trocknen des Lackes an der Luft noch bei Mischungen mit verschiedenen anderen auf ähnliche Weise erhaltenen Lacken Kornvergröberungen oder Ausschwimmerscheinungen zu beobachten.

Beispiel 7

Dieses Beispiel erläutert die Herstellung von verschiedenen gefärbten Pigmentdispersionen und ihre Verwendung bei der Herstellung von Anstrichfarben:

a) Pigmentdispersion mit Phthalocyaningrünpigment

Die folgenden Bestandteile:

| | |
|---|---|
| Pigmentdispergiermittel von Beispiel 1 in Beispiel 6 a) beschriebenes bekanntes | 8 Gew. – Teile |
| Acrylatharz | 83.3 Gew. – Teile |
| Phthalocyaningrünpigment | 8.5 Gew. – Teile |
| Solsperse 5000® | 0.2 Gew. – Teile |

wurden im Dissolver vermischt und in einer Sussmeyer – Rührwerkskugelmühle dispergiert. Solsperse 5000 ist ein Dispergieradditiv der Firma ICI und ist in den entsprechenden Datenblättern beschrieben sowie in der Veröffentlichung J. Toole, Developments in Hyperdispersants Technology for Paints; Paint + Resin – Febr. 1985.

b) Pigmentdispersion mit Phthalocyaninblaupigment

Die folgenden Bestandteile

| | |
|---|---|
| Pigmentdispergiermittel von Beispiel 1 in Beispiel 6 a) beschriebenes bekanntes | 6 Gew. – Teile |
| Acrylatharz | 88.05 Gew. – Teile |
| Phthalocyaninblaupigment | 5.9 Gew. – Teile |
| Solsperse 5000® | 0.05 Gew. – Teile |

wurden im Dissolver vermischt und in einer Sussmeyer – Rührwerkskugelmühle dispergiert.

c) Pigmentdispersion mit Chinacridonpigment

Die folgenden Bestandteile:

| | |
|---|---|
| Pigmentdispergiermittel von Beispiel 1 in Beispiel 6 a) beschriebenes bekanntes Acrylatharz | 10.8 Gew. – Teile |
| | 82 Gew. – Teile |
| Chinacridon – Magenta – Pigment | 7.2 Gew. – Teile |

wurden im Dissolver vermischt und in einer Sussmeyer – Rührwerkskugelmühle dispergiert.

d) Grüner Autolack

47 Gew. – Teile der grünen Pigmentdispersion von Beispiel 7a) wurden mit 53 Gew. – Teilen im Beispiel 6a) beschriebenes bekanntes Acrylatharz vermischt.

e) Blauer Autolack

53.8 Gew. – Teile der blauen Pigmentdispersion von Beispiel 7b) wurden mit 46.2 Gew. – Teilen im Beispiel 6a) beschriebenes bekanntes Acrylatharz vermischt.

f) Roter Autolack

84. Gew. – Teile der roten Pigmentdispersion von Beispiel 7c) wurden mit 16 Gew. – Teilen im Beispiel 6a) beschriebenes bekanntes Acrylatharz vermischt.

Erscheinungen wie Flokkulationen, Coflokkulationen, Glanzverluste sowie Aufschwimmen der Pigmente, die mit den üblichen Dispergierhilfsmitteln, wie sie in der Einleitung genannt wurden, nicht oder nur in unzureichendem Maße zu beheben sind, treten bei den beschriebenen Beispielen d), e) und f) praktisch nicht auf.

Beispiel 8

Herstellung einer Blautonpaste:

100 Gew. – Teile der blauen Pigmentdispersion von Beispiel 7b) werden mit 100 Gew. – Teilen der schwarzen Paste von Beispiel 6a) gründlich vermischt. Die resultierende Blautonpaste sowie der nach Zugabe der entsprechenden Menge im Beispiel 6a) beschriebenes bekanntes Acrylatharz resultierende Lack zeigen keine Kornvergröberung und keinen Glanzverlust gegenüber den monopigmentierten Lacken, wie es der Fall ist bei analogen Dispersionen, die unter Verwendung der handelsüblichen Dispergierhilfen nach Herstellerangaben gefertigt werden.

Gleichermaßen flockungsfreie Lacke erhält man bei Mischungen aus gleichen Anteilen Schwarzpaste (Beispiel 6a) ), Blaupaste (Beispiel 7b) ) sowie einer analog aus $TiO_2$ – Pigment hergestellten Weißtonpaste. Flokkulation und Ausschwimmen von Pigmenten treten nicht auf.

Die vorstehenden Beispiele erläutern Pigmentdispersionen, die, wie oben erwähnt, zusätzlich ein übliches Acrylatharz – Bindemittel enthalten. Die nachfolgenden Beispiele erläutern solche Pigmentdisper – sionen, die nicht solche zusätzlichen Bindemittel aufweisen.

Beispiel 9

a) Gelbe Pigmentdispersion mit yellow C.I.P.Y. 110
26.7 Gew. – Teile Pigmentdispergiermittel (Beispiel 1)
57.3 Gew. – Teile Lösemittelgemisch Xylol/Butylacetat (1:1)
16.0 Gew. – Teile Pigment yellow C.I.P.Y. 110
wurden mit dem Dissolver gemischt (5min) und dann in einer Perlmühle dispergiert. Die erreichte Mahlfeinheit betrug<10 $\mu$m.
b) Gelber Autolack
34.3 Gew. – Teile gelbe Pigmentdispersion aus 9a)
65.7 Gew. – Teile im Beispiel 6a) beschriebenes bekanntes Acrylatharz

wurden unter gutem Rühren gemischt.

Beispiel 10

a) Rotviolette Pigmentdispersion mit red C.I.P.R. 88
45.1 Gew. – Teile Pigmentdispergiermittel (Beispiel 1)
27.7. Gew. – Teile Pigment rot C.I. P.R. 88
wurden mit dem Dissolver gemischt (5min). Dann wurden
27.2 Gew. – Teile Lösemittelgemisch Xylol/Butylacetat (1:1)
eingerührt und anschließend in einer Perlmühle dispergiert. Die erreichte Mahlfeinheit betrug<10 $\mu$m.

b) Rotvioletter Autolack
18.0 Gew. – Teile rotviolette Pigmentdispersion Beispiel 10a
82.0 Gew. – Teile im Beispiel 6a) beschriebenes bekanntes Acrylatharz
wurden unter gutem Rühren gemischt.

Beispiel 11

a) Schwarze Pigmentdispersion mit black C.I.P.Bl. 7 (channel – Ruß)
31.2 Gew. – Teile Pigmentdispergiermittel (Beispiel 1)
9.5 Gew. – Teile Lösemittelgemisch Xylol/Butylacetat (1:1)
13.9 Gew. – Teile Pigment black C.I.P.Bl. 7
13.9 Gew. – Teile Calciumnaphthenatlösung 65%
wurden mit dem Dissolver gemischt (5min). Dann wurden
31.5 Gew. – Teile Lösemittelgemisch Xylol/Butylacetat (1:1)
eingerührt und anschließend in einer Perlmühle dispergiert.
Die erreichte Mahlfeinheit betrug <10 $\mu$m.
b) Schwarzer Autolack
12.5 Gew. – Teile schwarze Pigmentdispersion aus Beispiel 11a)
87.5 Gew. – Teile im Beispiel 6a) beschriebenes bekanntes Acrylhar
wurden unter gutem Rühren gemischt.

Beispiel 12

a) Weiße Pigmentdispersion
4.0 Gew. – Teile Pigmentdispergiermittel (Beispiel 1)
1.0 Gew. – Teile Bykumen®
2.5 Gew. – Teile Thixotropiermittel
51.3 Gew. – Teile im Beispiel 6a) beschriebenes bekanntes Acrylharz
41.2 Gew. – Teile Titandioxid white C.I.P.W. 6
wurden 2 min mit dem Dissolver dispergier. Die erhaltene Mahlfeinheit betrug <12$\mu$m.
b) Weißer Autolack
61.1 Gew. – Teile weiße Mahlgrundlage aus a)
38.9 Gew. – Teile im Beispiel 6a) beschriebenes bekanntes Acrylatharz
wurden unter gutem Rühren gemischt.

Die aus den Beispielen 9 bis 12 erhaltenen Lacke können allein oder in beliebigen Mischungen verarbeitet werden. So kann durch Abmischen verschiedener geeigneter Lacke der gewünschte Farbton erhalten werden.

Die in den Beispielen 9 bis 11 erhaltenen Pigmentdispersionen haben, trotz höherer Pigmentierung, eine sehr geringe Restviskosität. Diese Pigmentdispersionen sind für Rührwerkskugelmühlen sehr geeignet.

**Patentansprüche**

**1.** Pigmentdispersion, welche sich zur Herstellung von Überzugsmitteln eignet, enthaltend mindestens ein Pigment und mindestens ein Lösungsmittel und ein Pigmentdispergiermittel, wobei das Pigmentdis – pergiermittel aus einem OH – Gruppen enthaltenden Mischpolymeren besteht, das ethylenisch unge – sättigte Monomere einpolymerisiert enthält,
**dadurch gekennzeichnet,**

daß das Mischpolymere erhältlich ist durch die Umsetzung von
A) 80 bis 95 Gew. – % eines Copolymerisats aus
a) 0.5 bis 40 Gew. – % a1) N[N,N – Di – $C_{1bis4}$ – alkylamino – $C_{1bis8}$ – alkyl](meth) – acrylamiden allein oder im Gemisch mit N,N – Di – $C_{1bis4}$ – alkylamino – $C_{1bis8}$ – alkyl(meth)acrylaten, N – sub – stituierten (Meth)acrylamiden und/oder (Meth)acrylamid; oder a2) N,N – Di – $C_{1bis4}$ – alkylamino – $C_{1bis8}$ – alkyl(meth)acrylaten im Gemisch mit N – substituierten (Meth)acrylamiden und/oder (Meth)acrylamid; wobei das Verhältnis der Amino(meth)acrylate zu den Amido(meth)acrylaten 1 : 2 bis 2 : 1 sein soll,
b) 10 bis 40 Gew. – % Hydroxi – $C_{2-8}$ – alkyl(meth)acrylaten,
c) 20 bis 89.5 Gew. – % copolymerisierbaren $\alpha,\beta$ – olefinisch ungesättigten Verbindungen und
B) 5 bis 20 Gew. – % eines unverkappte und gegebenenfalls auch verkappte Isocyanatgruppen aufweisenden Polyisocyanats, das Biuret – , Urethan – oder Isocyanurat – Gruppen aufweist.

2.  Pigmentdispersion nach Anspruch 1, dadurch gekennzeichnet, daß sie zusätzlich ein Bindemittel enthält.

3.  Pigmentdispersion nach Anspruch 1 oder 2, dadurch gekennzeichnet, daß das Lösungsmittel ein organisches Lösungsmittel ist.

4.  Verwendung der Pigmentdispersion nach einem der Ansprüche 1 bis 3 zur Herstellung von Überzugs – mitteln auf organischer und/oder wässriger Basis.

5.  Verwendung nach Anspruch 4 zur Herstellung von Grundierungen und Lacken.

**Claims**

1.  A pigment dispersion, which is suitable for the production of coating agents, containing at least one pigment and at least one solvent and a pigment dispersant, wherein the pigment dispersant consists of a copolymer containing OH groups that contains ethylenically unsaturated monomers incorporated by polymerization,
characterized in that the copolymer is obtainable by the reaction of
A) 80 to 95 wt% of a copolymer of
a) 0.5 to 40 wt% a1) N – [N,N – di – $C_{1-4}$ – alkylamino – $C_{1-8}$ – alkyl](meth)acrylamides, alone or mixed with N,N – di – $C_{1-4}$ – alkylamino – $C_{1-8}$ – alkyl (meth)acrylates, N – substituted (meth) – acrylamides and/or (meth)acrylamide; or a2) N,N – di – $C_{1-4}$ – alkylamino – $C_{1-8}$ – alkyl (meth) – acrylates mixed with N – substituted (meth)acrylamides and/or methacrylamide; wherein the ratio of the amino(meth)acrylates to the amido(meth)acrylates has to be 1:2 to 2:1,
b) 10 to 40 wt% hydroxy – $C_{2-8}$ – alkyl (meth)acrylates,
c) 20 to 89.5 wt% copolymerizable $\alpha,\beta$ – olefinically unsaturated compounds, and
B) 5 to 20 wt% of a polyisocyanate having uncapped and optionally also capped isocyanate groups that has biuret, urethane or isocyanurate groups.

2.  A pigment dispersion according to Claim 1, characterized in that it contains in addition a binder.

3.  A pigment dispersion according to Claim 1 or 2, characterized in that the solvent is an organic solvent.

4.  The use of the pigment dispersion according to one of Claims 1 to 3 for the production of organic – and/or water – based coating agents.

5.  The use according to Claim 4 for the production of primers and lacquers.

**Revendications**

1.  Dispersion de pigment convenant à l'utilisation pour la fabrication de produits de revêtement, contenant au moins un pigment et au moins un solvant et un agent dispersant pour pigments, cet agent dispersant consistant en un copolymère qui contient des groupes OH et – à l'état polymérisé – des monomères à insaturation éthylénique,
caractérisée en ce que

le copolymère a été obtenu par réaction de

A) 80 à 95% en poids d'un copolymère de

a) 0,5 à 40% en poids de a1) des N-[N,N-di-(alkyle en C1-C4)-amino-(alkyle en C1-C8)](méth)acrylamides seuls ou en mélange avec des (méth)acrylates de N,N-di-(alkyle en C1-C4)-aminoalkyle en C1-C8, des (méth)acrylamides substitués à l'azote et/ou du (méth)-acrylamide ; ou de a2) des (méth)acrylates de N,N-di-(alkyle en C1-C4)amino-alkyle en C1-C8 en mélange avec des (méth)acrylamides substitués à l'azote et/ou du (méth)acrylamide; les proportions relatives entre les amino-(méth) acrylates et les amido-(méth)acrylates allant de 1:2 à 2:1,

b) 10 à 40% en poids de (méth)acrylates d'hydroxyalkyle en C2-C8,

c) 20 à 89,5% en poids de composés à insaturation alpha,bêta,oléfinique copolymérisables et

B) 5 à 20% en poids d'un polyisocyanate à groupes isocyanate non bloqués et le cas échéant bloqués, qui contient des groupes biuret, uréthanne ou isocyanurate.

2. Dispersion de pigment selon revendication 1, caractérisée en ce qu'elle contient en outre un liant.

3. Dispersion de pigment selon revendications 1 ou 2, caractérisée en ce que le solvant est un solvant organique.

4. Utilisation de la dispersion de pigment selon une des revendications 1 à 3 pour la fabrication de produits de revêtement à base organique et/ou aqueuse.

5. Utilisation selon revendication 4 pour la fabrication de peintures pour couches d'apprêt et pour couches finales.